# EUROPÄISCHE PATENTSCHRIFT

(11) **EP 1 128 906 B1**
(45) Veröffentlichungstag und Bekanntmachung des Hinweises auf die Patenterteilung: **26.11.2003**
(21) Anmeldenummer: 99955721.8
(22) Anmeldetag: 14.09.1999
(51) Int. Cl.: B01J 37/00, B01J 37/08, B01D 53/94

(54) **VERFAHREN ZUR HERSTELLUNG EINES KATALYSATORKÖRPERS**
METHOD FOR PRODUCING A CATALYST BODY
PROCEDE DE PRODUCTION D'UN CORPS DE POT CATALYTIQUE

(30) Priorität: 29.09.1998 DE 19844758
(43) Veröffentlichungstag der Anmeldung: 05.09.2001
(73) Patentinhaber: SIEMENS AKTIENGESELLSCHAFT, 80333 München (DE)
(72) Erfinder: NEUFERT, Ronald, D-96247 Michelau (DE); WITZEL, Frank, Bloomfield Hills, MI 48304 (US); FISCHER, Stefan, D-96215 Lichtenfels (DE); PAJONK, Günther, D-96199 Zapfendorf (DE)
(74) Vertreter: Tergau & Pohl Patentanwälte
(86) Internationale Anmeldenummer: DE9902941
(87) Internationale Veröffentlichungsnummer: WO00018506

(56) Entgegenhaltungen:
- EP-A- 0 385 164
- EP-A- 0 552 715
- DE-A- 3 838 472
- US-A- 4 085 193

## Beschreibung

Die Erfindung bezieht sich auf ein Verfahren zur Herstellung eines Katalysatorkörpers, wobei aus Ausgangsmaterialien eine knet- und/oder formbare Masse, umfassend Titandioxid, Wolframtrioxid und/oder Vanadinpentoxid,sowie Aluminiumoxid und Siliziumoxid, hergestellt wird, wobei die knet- und/oder formbare Masse durch Extrudieren oder durch Beschichten eines Tragkörpers zu einem Formkörper verarbeitet wird, und wobei der Formkörper zur Bildung einer Aktivmasse aus der Masse anschließend kalziniert wird.

Ein derartiges Herstellungsverfahren ist beispielsweise aus der US 4,085,193 bekannt. Ein auf diese Weise hergestellter Katalysatorkörper zeichnet sich durch eine hohe Aktivität hinsichtlich des Abbaus von Stickoxiden in einem gasförmigen Medium gemäß dem Verfahren der selektiven katalytischen Reduktion (SCR-Verfahren) aus. Dabei werden die in dem gasförmigen Medium enthaltenen Stickoxide auch in Anwesenheit von Sauerstoff mittels eines Reduktionsmittels zu Wasser und elementarem Stickstoff zersetzt.

Auch aus der DE 296 15 192 U1 ist ein solches Herstellungsverfahren bekannt. Zur Aufbringung weiterer Aktivkomponenten werden eine Tauchimprägnierung des kalzinierten Formkörpers und eine abschließende thermische Nachbehandlung vorgeschlagen.

Aus der EP 0 385 164 A2 ist ein Katalysator zur selektiven Reduktion von Stickoxiden mit Ammoniak bekannt, welcher neben Titanoxid als erster Komponente mindestens ein Oxid von W, Si, B, Al, P, Zr, Ba, Y, La, Ce und mindestens ein Oxid von V, Nb, Mo, Fe, Cu als zweite Komponente enthält. Nach Verarbeitung der verschiedenen Komponenten zu einer homogenen Knetmasse wird diese extrudiert. Anschließend wird das Extrudat getrocknet und an Luft bei 300 bis 800°C kalziniert.

Aus der EP 0 552 715 A1 ist ein Katalysator zur Reduzierung von Stickoxiden bekannt, welcher anorganische Fasern enthält. Diese werden mit katalytisch aktiven Substanzen vermischt. Eine hohe Leistung soll erreicht werden, wenn eine Molybdän, Vanadium oder Wolfram enthaltende Mischung bei 400 bis 700°C kalziniert wird.

Weiter ist aus der DE 35 20 024 A1 ein Herstellungsverfahren für einen SCR-Katalysator bekannt, der kein Titandioxid enthält. Bei der Herstellung wird in zwei Stufen kalziniert.

Die knet- und/oder formbare Masse wird bei einem derartigen Herstellungsverfahren entweder als wäßrige Aufschlämmung aus den genannten Materialien in Pulverform oder aus den genannten Materialien in Form ihrer Vorläuferverbindungen, wie z.B. Sauerstoffsäuren, durch Wasserentzug hergestellt. Dies ist in der genannten US 4,085,193 ausführlich beschrieben. Bei der Herstellung können den genannten Materialien weitere Hilfsoder Füllmittel beigesetzt werden, welche zum einen die Verarbeitung zu der knet- und/oder formbaren Masse erleichtern und zum anderen die Stabilität der fertigen Aktivmasse günstig beeinflussen. Solche Hilfsmittel sind beispielsweise keramische Füllstoffe oder gewisse organische oder silizium-organische Fasern. Gerade auch organische Fasern werden als Porenbildner eingesetzt, da die eingeschlossenen organischen Fasern bei dem abschließenden Kalzinierprozeß verbrennen.

Ein gemäß diesem Verfahren des Standes der Technik hergestellter Katalysatorkörper auf Basis von Titandioxid, Wolframtrioxid und/oder Vanadinpentoxid, Aluminiumoxid und Siliziumoxid wird üblicherweise auch als ein DeNOx-Katalysator bezeichnet. Ein derartiger Katalysatorkörper wird in Form eines durchströmbaren Formkörpers, beispielsweise in Wabenoder Plattenform oder aber auch in Form von Pellets oder einer Schüttung, zum Abbau von Stickoxiden im Abgas einer Verbrennungsanlage eingesetzt. Da die Anwesenheit von Sauerstoff kein Problem hinsichtlich der Reduzierung von Stickoxiden darstellt, wird ein derartiger Katalysatorkörper auch zur Verringerung von Stickoxiden im Abgas eines Dieselmotors eingesetzt. Auch das Abgas eines mit einem fossilen Kraftstoff befeuerten Kraftwerks, einer Müllverbrennungsanlage oder einer Gasturbine läßt sich mit einem derartigen Katalysatorkörper von Stickoxiden reinigen. Gerade der Einsatz als Diesel-Katalysator gewinnt jedoch zunehmend an Bedeutung.

Im Abgas eines Dieselmotors treten jedoch Temperaturen bis max. 650 °C auf. Der gemäß dem Stand der Technik hergestellte Katalysatorkörper eignet sich jedoch im wesentlichen nur bis zu einer Temperatur unterhalb von 450 °C für eine Verringerung der Stickoxide gemäß dem SCR-Verfahren. Oberhalb dieser Temperatur findet eine zunehmende Desaktivierung der Aktivmasse statt. Es findet eine irreversible Aktivitätsminderung statt. Danach ist auch bei tieferen Temperaturen eine genügend hohe katalytische Aktivität zum Abbau von Stickoxiden nicht mehr gewährleistet. Insbesondere bei einem Dieselmotor, welcher zur Traktion eines Fahrzeugs eingesetzt wird, und damit hohen Lastwechseln ausgesetzt ist, findet eine relativ rasche Desaktivierung der Aktivmasse des Katalysatorkörpers statt.

Die Erfindung hat sich daher die Aufgabe gestellt, ein Verfahren zur Herstellung eines Katalysatorkörpers auf Basis von Titandioxid anzugeben, so daß der Katalysatorkörper auch einer Temperaturbelastung von 400 °C bis 650 °C standhält.

Diese Aufgabe wird erfindungsgemäß dadurch gelöst, daß gegenüber einem Herstellungsverfahren des Standes der Technik der kalzinierte Formkörper durch eine abschließende Wärmebehandlung bei einer Temperatur von 620 °C bis 720 °C, die höher als die Kalziniertemperatur ist, über eine Gesamtdauer von 20 bis 80 Stunden vorgealtert wird.

Unter Kalzinieren wird eine Temperaturbehandlung verstanden, bei der die Ausgangsstoffe zu einem Gefüge von Kristalliten zusammenwachsen, bei der die flüchtigen Komponenten, z.B. Kristallwasser, entfernt werden, und bei der ein mechanisch stabiler Festkörper entsteht, der bei weiterer Temperaturbehandlung praktisch keine Volumenänderung mehr erfährt. In der Regel wird das Kalzinieren vorgenommen, indem der Formkörper aufgeheizt und für eine gewisse Haltezeit, z.B. 1 bis 20 Stunden, auf der erforderlichen Kalziniertemperatur, z.B. 400 bis 700°, gehalten wird.

Es hat sich überraschend gezeigt, daß eine Wärmebehandlung den kalzinierten Formkörper derart günstig beeinflußt, daß der Katalysatorkörper dadurch eine höhere Resistenz gegenüber einer Desaktivierung bei hohen Temperaturen aufweist. Welche chemischen Veränderungen der Aktivmasse dies bewerkstelligen, ist zur Zeit noch nicht bekannt. Möglicherweise findet durch die gezielte Wärmebehandlung eine höhere Vernetzung der einzelnen Komponenten der Aktivmasse des Katalysatorkörpers statt, wodurch eine Desaktivierung vermieden wird. Möglicherweise kann hierdurch eine Umkristallisation des Titandioxids aus der Anatas- in die Rutil-Modifikation unter Verlust von spezifischer Oberfläche verhindert werden.

In einer vorteilhaften Ausgestaltung der Erfindung wird die abschließende Wärmebehandlung bei einer Temperatur von 620 bis 720 °C durchgeführt. Diese Temperatur liegt deutlich höher als die übliche Einsatztemperatur des Katalysatorkörpers bei SCR-Anwendungen. Der Temperaturbereich hat sich als besonders vorteilhaft hinsichtlich der Standzeit des Katalysatorkörpers herausgestellt. Insbesondere hat sich ein Temperaturbereich von 660 bis 700 °C als vorteilhaft gezeigt.

Weiter von Vorteil ist es, wenn die Gesamtdauer der abschließenden Wärmebehandlung 20 bis 80 Stunden beträgt. Die maximale Stabilität des Katalysatorkörpers ist hierbei in der Regel nach etwa 35 Stunden erreicht. Die Wärmebehandlung kann sowohl kontinuierlich als auch diskontinuierlich mit Unterbrechungen durchgeführt werden.

Für das Herstellungsverfahren günstig ist es, wenn der Formkörper vor dem Kalzinieren bei einer Temperatur zwischen 20 °C bis 100 °C getrocknet wird.

Weiter ist es von Vorteil, wenn der Formkörper bei einer Temperatur von 400 °C bis 700 °C kalziniert wird.

In vorteilhafter Ausgestaltung der Erfindung umfaßt der Katalysatorkörper 65 bis 95 Gew.-% Titandioxid, 2 bis 30 Gew.-% Wolframtrioxid, 0 bis 2 Gew.-% Vanadiumpentoxid, 0,1 bis 10 Gew.-% Aluminiumoxid und 0,1 bis 10 Gew.-% Siliziumdioxid. Bindemittel und Füllstoffe können wie üblich beigemengt werden. Besonders günstig hinsichtlich einer Beständigkeit gegenüber einer Desaktivierung bei hohen Temperaturen ist es, wenn der Vanadiumpentoxid-Gehalt kleiner als 1,5 Gew.-% ist.

Der Katalysatorkörper sollte derart hergestellt sein, daß er eine spezifische Oberfläche, gemessen als BET-Oberfläche, von 30 bis 150 m²/g aufweist. Das Porenvolumen, gemessen nach dem Quecksilber-Eindringverfahren, sollte zwischen 100 und 1000 mm³/g mit mono- oder polymodaler Porenradienverteilung betragen.

Der hergestellte Katalysatorkörper kann in unterschiedlichster Geometrie eingesetzt werden. So kann er in Waben- oder Plattenform, in Form von Pellets oder in Form einer Schüttung eingesetzt werden. Besonders eignet sich der Katalysatorkörper für den Einsatz als DeNOx-Katalysator im Abgas eines Dieselmotors oder im Abgas einer Gasturbine.

Ein Ausführungsbeispiel wird anhand einer Zeichnung näher erläutert.

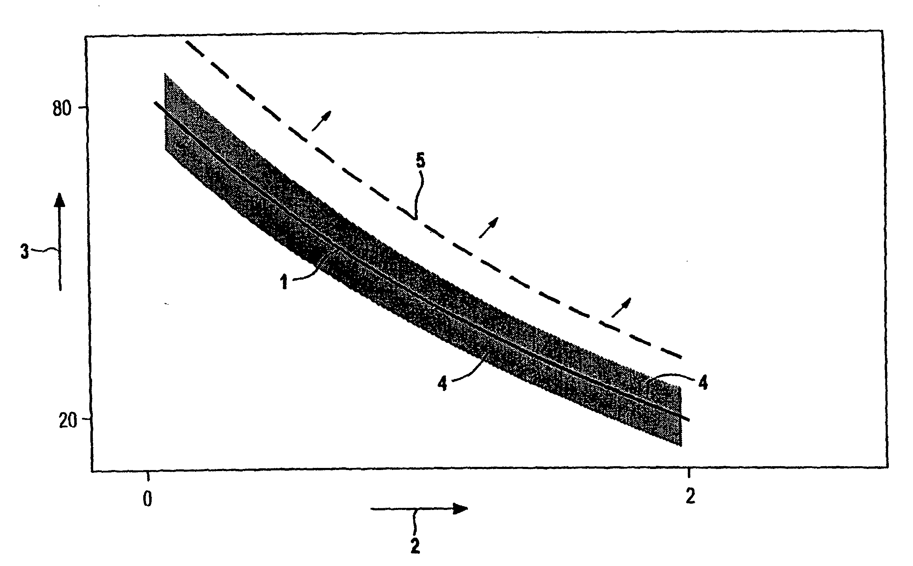

Dabei zeigt die Zeichnung die Abhängigkeit der Temperaturstabilität des Katalysatorkörpers von dem Gehalt an Vandiumpentoxid und der Dauer der abschließenden Wärmebehandlung.

Die Zeichnung faßt das Ergebnis folgenden Versuches zusammen:

Das Abgas eines Dieselmotors wird über einen als durchströmbaren Wabenkörper ausgebildeten Katalysatorkörper geleitet. Der Katalysatorkörper weist 85 Gew.-% Titandioxid, 10 Gew.-% Wolframtrioxid und zusammengefaßt 5 Gew.-% an Siliziumdioxid, Aluminiumoxid und Vanadiumpentoxid auf. Der Katalysatorkörper wurde 10 Stunden bei 500 bis 580 °C kalziniert.

Bei verschiedenen Gehalten an Vanadiumpentoxid zwischen 0 und 2 Gew.-% wurde der Effekt der Erhöhung der Temperaturstabilität des Katalysatorkörpers durch eine abschließende Wärmebehandlung nach Abschluß des Kalzinierprozesses untersucht.

Hierzu wurden die kalzinierten Katalysatorkörper mit verschiedenen Gehalten an Vanadiumpentoxid jeweils abschließenden Wärmebehandlungen unterzogen. Die Wärmebehandlungen erfolgten jeweils bei einer Temperatur von 650 bis 700 °C. Die Dauer der Wärmebehandlung wurde zwischen 20 und 80 Stunden variiert.

Zur Bestimmung der Temperaturstabilität wurde die Aktivität des Katalysatorkörpers hinsichtlich des Umsatzes an Stickoxiden vor und nach einer Temperaturbelastung durch heißes Abgas miteinander verglichen. Hierzu wurde zunächst die Aktivität des Katalysatorkörpers bei einer Abgastemperatur von 350 °C gemessen. Anschließend wurde die Abgastemperatur auf 650 °C erhöht und der Katalysatorkörper dieser erhöhten Abgastemperatur 100 Stunden lang ausgesetzt. Im Anschluß wurde wiederum die Aktivität des Katalysatorkörpers bei einer Abgastemperatur von 350 °C gemessen. Das Ergebnis der Messungen ist in der Zeichnung dargestellt. Der Gehalt 2 an Vanadiumpentoxid ist auf der Abszisse, die Dauer 3 der abschließenden Wärmebehandlung auf der Ordinate, dargestellt.

Man erkennt, daß die maximale Stabilität 1 (durchgezogene Linie) hinsichtlich hoher Temperaturen - definiert durch die Differenz 0 zwischen der Aktivität des Katalysatorkörpers vor und nach der Temperaturbelastung - mit steigendem Gehalt an Vanadiumpentoxid mit einer kürzeren Dauer 3 der abschließenden Wärmebehandlung erreicht wird. So wird beispielsweise bei einem Vanadiumpentoxid-Gehalt 2 von 2 Gew.-% die maximale Stabilität 1 des Katalysatorkörpers gegenüber einer Temperaturbelastung bereits bei einer Dauer 3 von 20 Stunden erzielt. Bei einem Vanadiumpentoxid-Gehalt 2, welcher gegen 0 tendiert, wird dagegen die maximale Stabilität 1 des Katalysatorkörpers erst bei einer Dauer 3 von etwa 80 Stunden der abschließenden Wärmebehandlung erzielt.

Neben der maximalen Stabilität 1 des Katalysatorkörpers hinsichtlich einer Temperaturbelastung ist in der Zeichnung noch ein Toleranzbereich 4 für eine gute Stabilität eingezeichnet. Der Toleranzbereich 4 ist hierzu grau schraffiert. Auch in diesem Toleranzbereich 4 wird gegenüber einem Katalysatorkörper, welcher nicht abschließend wärmebehandelt ist, noch eine ausreichende Stabilität hinsichtlich einer Temperaturbelastung erzielt.

Wird die Dauer 3 der abschließenden Wärmebehandlung über die für eine maximale Stabilität notwendige Dauer hinaus verlängert, so nimmt die Stabilität des Katalysatorkörpers gegenüber einer Temperaturbelastung wieder ab. Die Differenz aus Aktivität vor Belastung und Aktivität nach Belastung nimmt zu. Dieses Verhalten ist durch die gestrichelte Linie 5 in der Zeichnung schematisch dargestellt.

Katalysatorkörper, welche nicht einer abschließenden Wärmebehandlung unterzogen wurden, weisen allesamt eine Differenz der Aktivität vor Belastung und Aktivität nach Belastung auf, welche außerhalb des tolerierbaren Bereiches liegt. Bei allen unbehandelten Katalysatorkörpern wurde eine hohe Desaktivierung der katalytisch aktiven Masse einhergehend mit einem Verlust an katalytischer Aktivität durch den Einfluß der Temperaturbelastung festgestellt. Wird der Katalysatorkörper jedoch erfindungsgemäß mit einer abschließenden Wärmebehandlung behandelt, so findet eine derartige Desaktivierung der katalytisch aktiven Masse durch eine Temperaturbelastung von über 400 °C nicht statt. Überraschend hat es sich gezeigt, daß bei entsprechender Wahl der Dauer der abschließenden Wärmebehandlung die Aktivität des Katalysatorkörpers nach der Temperaturbelastung noch genauso hoch ist wie vor der Temperaturbelastung. Dies ist ein erstaunliches Ergebnis und belegt den Wert des erfindungsgemäßen Herstellungsverfahrens.

## Patentansprüche

1. Verfahren zur Herstellung eines Katalysatorkörpers, wobei aus Ausgangsmaterialien eine knet- und/oder formbare Masse, umfassend Wolframtrioxid und/oder Vanadiumpentoxid, Titandioxid, sowie Aluminiumoxid und Siliziumoxid, hergestellt wird, wobei die knet- und/oder formbare Masse durch Extrudieren oder durch Beschichten eines Tragkörpers zu einem Formkörper verarbeitet wird, und wobei der Formkörper zur Bildung einer Aktivmasse aus der Masse anschließend bei einer Kalziniertemperatur kalziniert wird,
**dadurch gekennzeichnet, daß**
der kalzinierte Formkörper durch eine abschließende Wärmebehandlung bei einer Temperatur von 620° bis 720 °C, die höher als die Kalziniertemperatur ist, über eine Gesamtdauer von 20 bis 80 Stunden vorgealtert wird.

2. Verfahren nach Anspruch 1,
**dadurch gekennzeichnet, daß** die abschließende Wärmebehandlung bei einer Temperatur von 660 bis 700 °C durchgeführt wird.

3. Verfahren nach einem der vorhergehenden Ansprüche,
**dadurch gekennzeichnet, daß** der Formkörper vor dem Kalzinieren bei einer Temperatur von 20 bis 100 °C getrocknet wird.

4. Verfahren nach einem der vorhergehenden Ansprüche,
**dadurch gekennzeichnet, daß** der Formkörper bei einer Temperatur von 400 bis weniger als 700 °C kalziniert wird.

5. Verfahren nach einem der vorhergehenden Ansprüche,
**dadurch gekennzeichnet, daß** die Ausgangsmaterialien so gewählt werden, daß der Formkörper 65 bis 95 Gew.-% Titandioxid, 2 bis 30 Gew.-% Wolframtrioxid, 0 bis 2 Gew.-% Vanadiumpentoxid, 0,1 bis 10 Gew.-% Aluminiumoxid und 0,1 bis 10 Gew.-% Siliziumdioxid umfaßt.

6. Verfahren nach Anspruch 5,
**dadurch gekennzeichnet, daß** die Ausgangsmaterialien so gewählt werden, daß der Formkörper weniger als 1,5 Gew.-% Vanadiumpentoxid umfaßt.

7. Verfahren nach einem der vorhergehenden Ansprüche,
**dadurch gekennzeichnet, daß** die Ausgangsmaterialien so gewählt werden, daß der Formkörper 65 bis 95 Gew.-% Titandioxid, 0 bis 2 Gew.-% Vanadiumpentoxid, 0,1 bis 10 Gew.-% Aluminiumoxid und 0,1 bis 10 Gew.-% Siliziumdioxid umfaßt.

8. Verfahren nach Anspruch 7,
**dadurch gekennzeichnet, daß** die Ausgangsmaterialien so gewählt werden, daß der Formkörper weniger als 1,5 Gew.-% Vanadiumpentoxid umfaßt.

## Claims

1. Method for producing a catalyst body, wherein a kneadable and/or shapable compound, comprising tungsten trioxide and/or vanadium pentoxide, titanium dioxide, and also aluminium oxide and silicon oxide, is produced from starting materials, wherein the kneadable and/or shapable compound is processed by extruding or by coating a carrier body to form a shaped body, and wherein in order to form an active compound from the compound the shaped body is subsequently calcined at a calcination temperature, **characterised in that** the calcined shaped body is aged by final heat treatment at a temperature of 620° to 720°C, which is higher than the calcination temperature, for a total period of 20 to 80 hours.

2. Method according to claim 1, **characterised in that** the final heat treatment is carried out at a temperature of 660 to 700°C.

3. Method according to one of the preceding claims, **characterised in that** the shaped body is dried before calcination at a temperature of 20 to 100°C.

4. Method according to one of the preceding claims, **characterised in that** the shaped body is calcined at a temperature of 400 to less than 700°C.

5. Method according to one of the preceding claims, **characterised in that** the starting materials are selected in such a way that the shaped body comprises 65 to 95% by weight titanium dioxide, 2 to 30% by weight tungsten trioxide, 0 to 2% by weight vanadium pentoxide, 0.1 to 10% by weight aluminium oxide and 0.1 to 10% by weight silicon dioxide.

6. Method according to claim 5, **characterised in that** the starting materials are selected in such a way that the shaped body comprises less than 1.5% by weight vanadium pentoxide.

7. Method according to one of the preceding claims, **characterised in that** the starting materials are selected in such a way that the shaped body comprises 65 to 95% by weight titanium dioxide, 0 to 2% by weight vanadium pentoxide, 0.1 to 10% by weight aluminium oxide and 0.1 to 10% by weight silicon dioxide.

8. Method according to claim 7, **characterised in that** the starting materials are selected in such a way that the shaped body comprises less than 1.5% by weight vanadium pentoxide.

## Revendications

1. Procédé de production d'un corps catalyseur, dans lequel on réalise à partir de matériaux de départ une masse pétrissable et/ou déformable, comportant du trioxyde de tungstène et/ou du pentoxyde de vanadium, du dioxyde de titane, ainsi que de l'oxyde d'aluminium et de l'oxyde de silicium, la masse pétrissable et/ou déformable étant travaillée en un corps façonné par extrusion ou par revêtement d'un corps porteur, et le corps façonné étant ensuite calciné à une température de calcination pour former une masse active à partir de ladite masse,
**caractérisé en ce que** le corps façonné calciné est soumis à un vieillissement préliminaire pendant une durée totale de 20 à 80 heures par un traitement thermique successif à une température de 620° à 720° qui est supérieure à la température de calcination.

2. Procédé selon la revendication 1, **caractérisé en ce que** le traitement thermique successif est effectué à une température de 660 à 700°C.

3. Procédé selon l'une des revendications précédentes, **caractérisé en ce que** le corps façonné est séché à une température de 20 à 100°C avant la calcination.

4. Procédé selon l'une des revendications précédentes, **caractérisé en ce que** le corps façonné est calciné à une température de 400 à moins de 700°C.

5. Procédé selon l'une des revendications précédentes, **caractérisé en ce que** l'on choisit les matériaux de départ de telle sorte que le corps façonné comprend 65 à 95 % en poids de dioxyde de titane, de 2 à 30 % en poids de trioxyde de tungstène, de 0 à 2 % en poids de pentoxyde de vanadium, de 0,1 à 10 % en poids d'oxyde d'aluminium et de 0,1 à 10 % en poids de dioxyde de silicium.

6. Procédé selon la revendication 5, **caractérisé en ce que** l'on choisit les matériaux de départ de telle sorte que le corps façonné comprend moins de 1,5 % en poids de pentoxyde de vanadium.

7. Procédé selon l'une des revendications précédentes, **caractérisé en ce que** l'on choisit les matériaux de départ de telle sorte que le corps façonné comprend 65 à 95 % en poids de dioxyde de titane, de 0 à 2 % en poids de pentoxyde de vanadium, de 0,1 à 10 % en poids d'oxyde d'aluminium et de 0,1 à 10 % en poids de dioxyde de silicium.

8. Procédé selon la revendication 7, **caractérisé en ce que** l'on choisit les matériaux de départ de telle sorte que le corps façonné comprend moins de 1,5 % en poids de pentoxyde de vanadium.
